# EUROPÄISCHE PATENTANMELDUNG

(11) **EP 3 742 219 A2**
(43) Veröffentlichungstag der Anmeldung: **25.11.2020**
(21) Anmeldenummer: 20168361.2
(22) Anmeldetag: 07.04.2020
(51) Int. Cl.: G02C 1/02

(54) **RANDLOSBRILLENFASSUNG**

(30) Priorität: 23.05.2019 DE 102019113769
(71) Anmelder: Temming Holding GmbH, 33334 Gütersloh (DE)
(72) Erfinder: Temming, Markus, 33615 Bielefeld (DE)
(74) Vertreter: Rolf, Gudrun

(57) **Zusammenfassung**

Es wird eine Randlosbrillenfassung aus Brillengläsern (2) mit in Durchgangsausnehmungen (3) festgelegten Brillenbacken (4) und/oder Nasenstegen (5) zur Verfügung gestellt, deren Brillenbauteile sich mit einfachsten technischen Mitteln an einem Brillenglas (2) befestigen lassen und dabei das Sichtfeld nur unwesentlich beschränken und ein einfaches technisches Hilfsmittel zur Verfügung gestellt, um diese Brillenbauteile passgenau an einem Brillenglas (2) und auch andere verschieden Applikationen einfach und wirkungsvoll an der Randlosbrillenfassung anordnen zu können, was dadurch erzielt wird, dass eine Durchgangsausnehmung (3) aus parallel nebeneinander angeordneten Durchgangsbohrungen gleichen oder unterschiedlichen Durchmessers besteht, deren Mittelachsen enger nebeneinander verlaufen, als das Maß der Summe ihrer beiden Radien beträgt und eine achtformartige Durchgangsausnehmung (3) erzeugt ist.

## Beschreibung

Die Erfindung betrifft eine Randlosbrillenfassung und eine Bohrhilfe für deren Herstellung, wobei die Randlosbrillenfassung aus Brillengläsern mit in Durchgangsausnehmungen festgelegten Brillenbacken und Nasenstegen besteht.

Es ist ein Brillenbauteilbefestigungselement und ein Verfahren zum Befestigen von Bauteilen einer Brille aneinander bekannt, DE 10 2004 010 841 B4, welches entweder je Brillenbacke oder Nasensteg das Einbringen von zwei benachbarten Durchgangsbohrungen in ein Brillenglas erfordert oder aber die Erzeugung eines Langloches, was den Nachteil mit sich bringt, dass bei der Erzeugung zweier Durchgangsbohrungen diese einen gewissen Abstand vom Brillenglasrand und einen sehr exakten Abstand voneinander aufweisen müssen, um eine ausreichende Stabilität der Randlosbrillenfassung gewährleisten zu können, wodurch sich die Befestigungsabschnitte der Brillenbacken und der Nasenstege aber sehr weit in das Blickfeld eines Brillenträgers hinein erstrecken, was diesen behindern kann. Bei der Anordnung von Langlöchern ist es dagegen von Nachteil, dass diese nur über präzise geführte Fräsen erzeugbar sind, wodurch sich die Herstellung solcher Brillenfassung unnötig verteuert und verkompliziert.

Aufgabe der Erfindung ist es, eine Randlosbrillenfassung zur Verfügung zu stellen, deren Brillenbauteile, wie Brillenbacken und Nasenstege, sich mit einfachsten technischen Mitteln an einem Brillenglas befestigen lassen und dabei das Sichtfeld nur unwesentlich beschränken und weiterhin ein einfaches technisches Hilfsmittel zur Verfügung zu stellen, um diese Brillenbauteile passgenau an einem Brillenglas befestigen zu können. Weiterhin soll es die Randlosbrillenfassung gestatten verschieden Applikationen einfach und wirkungsvoll daran anordnen zu können.

Die Lösung dieser Aufgabe ergibt sich in Verbindung mit den Merkmalen der Oberbegriffe des Hauptanspruches und des sechsten, zwölften und vierzehnten Patentanspruches erfindungsgemäß zusammen mit aus deren kennzeichnenden Merkmalen.

Die Durchgangsausnehmungen in einem Brillenglas bestehen dabei ebenfalls aus parallel nebeneinander angeordneten Durchgangsbohrungen gleichen oder unterschiedlichen Durchmessers, jedoch verlaufen deren Mittelachsen enger nebeneinander als das Maß der Summe ihrer beiden Radien beträgt, sodass sich die Durchgangsbohrungen gegenseitig überschneiden und so eine achtformartige Durchgangsausnehmung bilden.

Für deren Herstellung muss demnach keine Tischfräsmaschine beschafft und eingesetzt werden und die sich überschneiden Durchgangsbohrungen ermöglichen die Verwirklichung von sich weniger weit in ein freies Sichtfeld eines Brillenglases hineinerstreckender Halteteile der Brillenbacken und Nasenstege, wobei durch die achtformartige Kontur der Durchgangsausnehmung trotzdem ein Formschluß hergestellt ist und Drehmomente um eine Hochachse durch die Durchgangsausnehmung aus den Brillenbauteilen oder den Brillengläsern verdrehungsfrei aufgenommen und abgetragen werden können.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung weist eine Brillenbacke oder ein Nasensteg ein parallel vor einer flachen Oberfläche eines Brillenglases verlaufendes Ende mit zwei sich winklig davon in die Durchgangsausnehmung hineinerstreckenden Befestigungszapfen auf, die sich des Weiteren in eine von der entgegengesetzten Rückseite des Brillenglases eingesetzte Befestigungshülse erstrecken und darin festgesetzt sind.

Diese Befestigungshülsen können erfindungsgemäß sehr viel kleiner ausgeführt werden als solche in Langlöcher oder separate Durchgangsbohrungen des bekannten Standes der Technik einzusetzende Kunststoffhülsen, sodass damit insgesamt nur noch ein sehr geringer Platzbedarf für die Befestigung der Brillenbauteile erforderlich ist. Zudem werden je Brillenglas nicht mehr vier, sondern nur noch zwei Befestigungshülsen benötigt, was nicht nur einen wirtschaftlichen Vorteil mit sich bringt, sondern auch einen handhabungstechnischen Vorteil bei der Herstellung der Brille, da erheblich weniger filigrane Bauteile von Hand aufgenommen und verbaut werden müssen, was zu einer wesentlichen Erleichterung und Beschleunigung der Montage führt.

Diese sich von einer Brillenbacke oder einem Nasensteg in die Durchgangsausnehmung erstreckenden Befestigungszapfen sind bei einer ersten Ausführungsform starr an der Brillenbacke oder dem Nasensteg angeordnet bzw. einteilig mit diesem ausgeführt und allseitig mit einer gezahnten und/ oder gewellten Außenkontur versehen, um einen festen Sitz in einer Befestigungshülse zu gewährleisten. Eine solche Befestigungshülse ist dabei bevorzugt mit jeweils einer Aufnahmetasche je Befestigungszapfen ausgestattet, sodass trotz der insgesamt kleinen Abmessungen der Befestigungszapfen und der Befestigungshülse doch große Haltekräfte erzeugt werden können, die sich aus reibschlüssigen und formschlüssigen Anteilen und elastischen Klemmkräften zusammensetzen.

Gemäß einer zweiten vorteilhaften Ausführungsform der Erfindung sind die Befestigungszapfen geringfügig elastisch verformbar an einer Brillenbacke oder einem Nasensteg angeordnet und weisen in voneinander entgegengesetzte Richtungen nach außen jeweils eine ebenfalls gezahnte und/ oder gewellte Außenkontur auf, wobei die Befestigungshülse eine gemeinsame Aufnahmetasche für die beiden Befestigungszapfen aufweist und von der Glasrückseite mit einer Durchgangsöffnung in die Aufnahmetasche ausgestattet ist, durch die im montierten Zustand einer Befestigungshülse und der Befestigungszapfen ein Spreizstift einführbar ist, um die beiden Befestigungszapfen in der Befestigungshülse auseinander zu drücken, um damit wiederum die gewünschten Haltkräfte mit ihren reibschlüssigen und formschlüssigen Anteilen und elastischen Klemmkräften zu erhalten.

Entsprechend einer bevorzugten Ausführungsform der Erfindung weist die Befestigungshülse in beiden Ausführungsformen mit ein oder zwei Taschen, wie die Durchgangsausnehmung, eine im Querschnitt ebenfalls mittig eingeschnürte, achtformartige Außenkontur auf, wobei sie in ihrem nach außen gerichteten, den Befestigungszapfen gegenüberliegenden Endbereich nur im Bereich der Einschnürung mit beidseitig vorspringenden Hülsenkrempen als Auflagerflächen auf einer Rückseite eines Brillenglases ausgebildet ist, wodurch insbesondere bei stark konkaven Gläsern erreicht wird, dass die Befestigungshülse insgesamt tiefer im Brillenglas versenkt werden kann, als wenn sie eine vollständig umlaufende Krempe aufweisen würde. Hierdurch ergibt sich vorteilhaft, dass die Befestigungshülse weniger erhaben von der Rückseite eines Brillenglases absteht, was des Weiteren zu einer gesteigerten Unauffälligkeit der Art und Weise der Anbringung von Brillenbacken und Nasenstegen an einem Brillenglas führt.

Bei einer weiteren vorteilhaften Ausführungsform der erfinderischen Randlosbrillenfassung ist vor und/ oder hinter einem Brillenglas ein Applikationsteil angeordnet, das sich beispielsweise im Bereich des oberen Brillenglasrandes oder des unteren Brillenglasrandes oder rahmenartig im Bereich des oberen und des unteren Brillenglasrandes von einer zur anderen Durchgangsausnehmung oder zumindest von einem Bereich einer Durchgangsausnehmung bis zum Bereich der andern Durchgangsausnehmung erstreckt und welches im Bereich der Befestigungszapfen teilweise von diesen durchdrungen ist oder sich in diesen Bereichen an den Brillenbacken und Nasenstegen abstützt, sodass sich auch eine Randlosbrillenfassung mit zusätzlichen Applikationsteilen ausstatten lässt, was die Gestaltungsmöglichkeit der Randlosbrillenfassung um ein Vielfaches vergrößert.

Das Applikationsteil kann dabei entweder vorteilhaft zwischen dem Brillenglas und dem Nasensteg und zwischen Brillenglas und der Brillenbacke festgeklemmt sein, oder es kann alternativ auch eine lösbare Verbindungsvorrichtung mit dem Nasensteg und der Brillenbacke aufweisen und entweder dazwischen oder darum herumgreifend festgeklemmt sein. Die Verbindungsvorrichtung des Applikationsteils besteht dazu bevorzugt aus einer seitlich nach innen oder nach außen offenen Befestigungsausnehmung im Applikationsteil und der Nasensteg und die Brillenbacke sind jeweils im Bereich der Befestigungszapfen mit einen Montageabsatz zur Aufnahme der Befestigungsausnehmung ausgestattet, sodass das Applikationsteil durch eine leichte elastische Verformung werkzeugfrei auf dem Brillenglas montiert oder auch wieder demontiert werden kann.

Die Brillenbacken und die Nasenstege sind dabei im Wesentlichen aus wenige Zehntel Millimeter dickem Titanblech oder einem Blech aus einer Titanlegierung gefertigt, insbesondere daraus ausgelasert und bis auf die Gelenkbauteile der Brillenbacken und den eventuell verbauten Nasenauflagepads der Nasenstege einteilig ausgebildet, sodass eine extrem leichte aber widerstandsfähige und sehr elastische Randlosbrillenfassung zur Verfügung gestellt wird. Eine Fertigung aus Edelstahl oder anderen Metallwerkstoffen ist natürlich ebenfalls denkbar und wird vom Hauptanspruch mit umfasst, ebenso wie die Bauteile aus dünnen platten- oder blattförmigem Material ausgesägt, ausgestanzt, erodiert oder anderweitig hergestellt sein können.

Zur Herstellung der erfinderischen Durchgangsausnehmungen mittels Durchgangsbohrungen in einem Brillenglas dient eine Bohrhilfe, die aus einem etwa hemdknopfgroßen Flachstück mit einem nach oben gerichteten Zylinderstift mit dem Durchmesser einer ersten Durchgangsbohrung durch ein Brillenglas besteht und aus einer Durchgangsbohrung in dem Flachstück, ebenfalls mit dem Durchmesser einer Durchgangsbohrung durch ein Brillenglas. Der Zylinderstift und die Durchgangsbohrung sind in einem gegenseitigen Abstand eines Brillenglasrandes zu einer ersten Durchgangsbohrung in einem Brillenglas angeordnet und stellen so eine Bohrhilfe für eine erste Durchgangsbohrung im Brillenglas dar. Weiterhin besitzt die Bohrhilfe einen dem ersten Zylinderstift entgegengesetzt nach unten gerichteten Teilzylinderstift, ebenfalls mit dem Durchmesser einer Durchgangsbohrung durch ein Brillenglas, dessen Mittelachse jedoch enger neben der der ersten Durchgangsbohrung verläuft, als das Maß der Summe ihrer beiden Radien beträgt, wobei der Teilzylinderstift einen kreisförmigen Querschnitt mit einer teilkreisförmigen Ausnehmung aufweist, die in Richtung der Durchgangsbohrung des Flachstückes ausgerichtet ist und sich in der Durchgangsbohrung durch das Flachstück fortsetzt.

Mittels dieser Durchgangsbohrungen in dem Flachstück und dem nach oben gerichteten Zylinderstift lassen sich nun die beiden erforderlichen Durchgangsbohrungen je Durchgangsausnehmung erzeugen, wobei zusätzlich ein zweites Flachstück zu Anwendung kommt sowie eine Bohrhilfenaufnahme, die aus einem flachen Blech besteht und zwei zueinander gerichtete parallele Seitenausnehmungen in gleicher oder unterschiedlicher Höhe aufweist, in die die mit Parallelnuten versehenden Flachstücke von außen nach innen einschiebbar sind, wobei im Blech eine schmale Schlitzausnehmung zur Durchsicht einer auf einem Brillenglas markierten Glasachse angeordnet ist, sodass sich nacheinander die Durchgangsbohrungen mit einfachen Bohrmaschinen erzeugen lassen, ohne dass für die Herstellung der Durchgangsausnehmung teure Tischfräsmaschinen erforderlich wären.

Gemäß einer weiteren vorteilhaften Ausführungsform der Erfindung ist jedem Brillenglas ein weiteres zusätzliches oder alternatives Applikationsteil zugeordnet, welches sich optisch nach Art eines Windsorringes als Schmuckteil außen um die Stirnseite des Brillenglases herum erstreckt. Windsorringe ummanteln gewöhnlich dünnwandige Metallrahmen von Brillenglasfassungen mit einem Überzug aus Celluloid oder Kunststoff, wobei Sie im Querschnitt C-förmig ausgebildet sind und mindestens eine optisch und technisch nachteilige Nahtstelle aufweisen. Da die erfindungsgemäße Randlosbrillenfassung keine solche Brillenglaseinfassung aufweist, kann das Applikationsteil vorteilhaft und neuartig weitergebildet sein. Es kann etwa bevorzugt geschlossen ringförmig als Schmuckring ausgebildet sein, wobei dessen Durchmessermaß maximal dem Umfangsmaß des Brillenglases entspricht. Der Schmuckring passt sich bei der Montage dann aufgrund seiner Flexibilität der Form und der Größe des Brillenglases an. Weiterhin kann der Schmuckring bevorzugt aus einem weichen Kunststoff gefertigt und geringfügig elastisch ausgebildet sein, sodass der sich einfach um ein Brillenglas herum auf dessen Stirnseiten aufziehen und der Randlosfassung einfach und wirkungsvoll ein farbiger dünner Außenrand gestalterisch hinzufügen lässt.

Vorzugsweise ist ein Brillenglas dabei umlaufend mit einer Ringnutausnehmung und der Schmuckring mit einem umlaufenden Innensteg ausgestattet, der sich im montierten Zustand des Schmuckringes in die Ringnutausnehmung erstreckt, sodass eine sichere formschlüssige Verriegelung des im Querschnitt dann T-Profil-förmigen Schmuckringes auf dem Brillenglas erreicht wird, welcher dadurch weiterhin und sehr vorteilhaft als von einem Brillennutzer werkzeugfrei und leicht austauschbares Schmuckaccessoire ausgebildet ist und zudem in unterschiedlichsten Farben und Formen ausgestaltet sein kann, sodass sich einem Brillendesigner eine unübersehbare Gestaltungsvielfalt bietet.

Nachfolgend sind einige Ausführungsbeispiele der Randlosbrillenfassung und der Bohrhilfe samt Bohrhilfenaufnahme und mehreren Applikationen anhand von Figuren näher beschrieben. Es zeigen:
- Fig. 1: eine geschnittene Teilansicht einer Randlosbrillenfassung mit einer ersten Verbindungsmöglichkeit,
- Fig. 2: eine geschnittene Teilansicht einer Randlosbrillenfassung mit einer zweiten Verbindungsmöglichkeit,
- Fig. 3: eine 3D-Ansicht eines Brillenglases mit einer montierten Brillenbacke und einem Nasensteg in Explosionsdarstellung,
- Fig. 4: eine lange Befestigungshülse einer ersten Verbindungsmöglichkeit in räumlicher Ansicht,
- Fig. 5: eine kurze Befestigungshülse in einer ersten Verbindungsmöglichkeit in räumlicher Ansicht,
- Fig. 6: eine kurze Befestigungshülse einer zweiten Verbindungsmöglichkeit in räumlicher Ansicht von schräg oben,
- Fig.7: die Befestigungshülse gemäß Fig. 6 in räumlicher Ansicht von schräg hinten,
- Fig. 8: eine starkvergrößerte Darstellung zweiter Befestigungszapfen der Brillenbacke der zweiten Verbindungsmöglichkeit,
- Fig. 9: eine 3D-Teilansicht einer in einer ersten Durchgangsbohrung eingesteckten Bohrhilfe nach Durchführung der zweiten Bohrung von schräg hinten,
- Fig. 10: eine 3D-Teilansicht des Gegenstandes der Fig. 9 von schräg oben,
- Fig. 11: eine räumliche Strichzeichnung der Bohrhilfe der Fig. 10,
- Fig. 12: eine Ansicht der Bohrhilfe gemäß Fig. 10,
- Fig. 13: eine teilweise geschnittenen Seitenansicht der Bohrhilfe gemäß Fig. 10,
- Fig. 14: eine Draufsicht auf die Bohrhilfe gemäß Fig. 10,
- Fig. 15: eine 3D-Ansicht zweier Bohrhilfen in einer Bohrhilfenaufnahme in Position vor einem Brillenglas vor dem Einbringen einer ersten Durchgangsbohrung,
- Fig. 16: eine 2D-Ansciht der Fig. 15,
- Fig. 17: eine 3D-Ansicht zweier Bohrhilfen in einer Bohrhilfenaufnahme in Position für eine zweiten Bohrung in einer Ansicht von schräg oben,
- Fig. 18: eine Ansicht der Fig. 17,
- Fig. 19: eine Variante einer Bohrhilfenaufnahme,
- Fig. 20: eine Teilansicht eines Brillenglases mit einem weiteren Applikationsteil,
- Fig. 21: ein weiteres Brillenglas mit eingebrachten Durchgangsausnehmungen,
- Fig. 22: ein rahmenartiges Applikationsteil,
- Fig. 23: ein bügelartiges Applikationsteil,
- Fig. 24: eine geschnittene Teilansicht einer Randlosbrillenfassung mit dem vor einem Brillenglas festzulegenden Applikationsteil der Fig. 22,

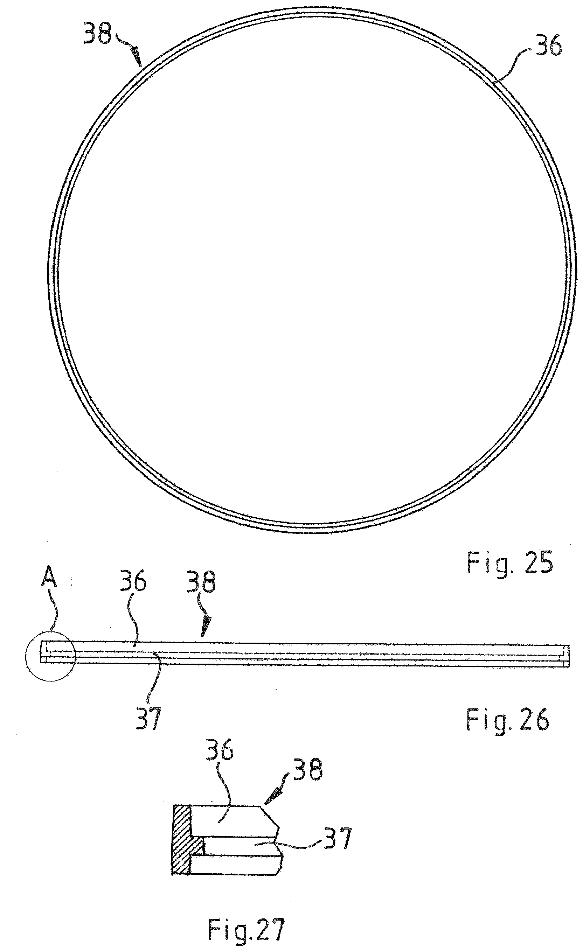

- Fig. 25: eine Ansicht eines windsorringartigen Schmuckringes als ergänzendes weiteres Applikationsteil,
- Fig. 26: eine Seitenansicht des Schmuckringes, und
- Fig. 27: eine stark vergrößerte Schnittansicht des Schmuckringes der Fig. 25 und 26.

Die Randlosbrillenfassung 1;11 besteht aus zwei Brillengläsern 2 mit in Durchgangsausnehmungen 3 daran festgelegten Brillenbacken 4;14;44 und Nasenstegen 5;15;45, wobei die Durchgangsausnehmung 3 bei dieser Ausführungsform aus parallel nebeneinander angeordneten Durchgangsbohrungen gleichen Durchmessers besteht. Die Durchmesser anderer Ausführungsformen können jedoch auch unterschiedlich groß ausfallen. Die Mittelachsen der Durchgangsbohrungen verlaufen dabei enger nebeneinander als das Maß der Summe ihrer beiden Radien beträgt, sodass eine achtformartige Durchgangsausnehmung 3 in einem vorbestimmten Seitenabstand vom Rand eines Brillenglases 2 erzeugt ist. Die Brillenbacken 4;14;44 und der Nasensteg 5;15;45 bestehen im Wesentlichen aus einem Titanblech oder einem Blech aus einer Titanlegierung, aus dem sie ausgelasert sind, wobei sie parallel vor einem Brillenglas 2 verlaufende Enden mit zwei sich winklig davon in die Durchgangsausnehmung 3 hineinerstreckende Befestigungszapfen 6;16 aufweisen, die sich in von der entgegengesetzten Seite eines Brillenglases 2 eingesetzte Befestigungshülsen 7;17;27 hinein erstrecken. Die Bauteile der Randlosbrillenfassung 1;11 für die Brillenbacken 4;14;44 und den Nasensteg 5;15;45 können alternativ auch aus Edelstahl oder anderen Metallwerkstoffen oder auch sonstigen Werkstoffen mit der erforderlichen Festigkeit bestehen und wahlfrei hergestellt sein.

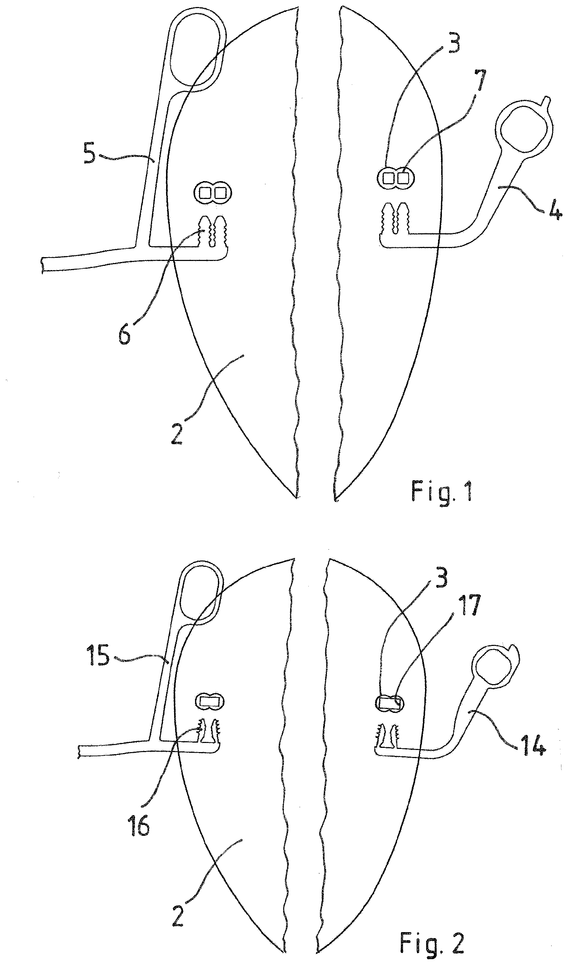

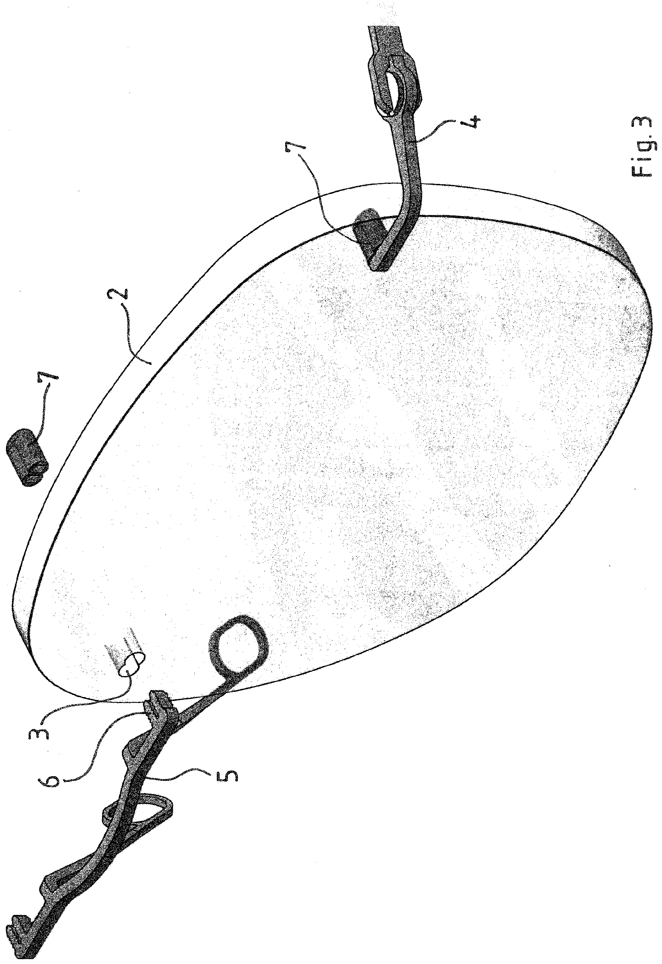

Diese Befestigungszapfen 6 einer ersten Verbindungsmöglichkeit, wie sie in der Fig. 1, 3 und Fig. 24 dargestellt sind, sind starr an der Brillenbacke 4;44 und dem Nasensteg 5;45 angeordnet und weisen rundherum eine gezahnte Außenkontur auf, die auch gewellt sein könnte, oder abschnittsweise gezahnt und abschnittsweise gewellt, wobei sich jeder Befestigungszapfen 6 in eine eigene Aufnahmetasche 8 der Befestigungshülse 7 erstreckt und dort eingepresst kraft- und formschlüssig gehalten ist und so den Zusammenhalt der Randlosbrillenfassung 1 gewährleistet.

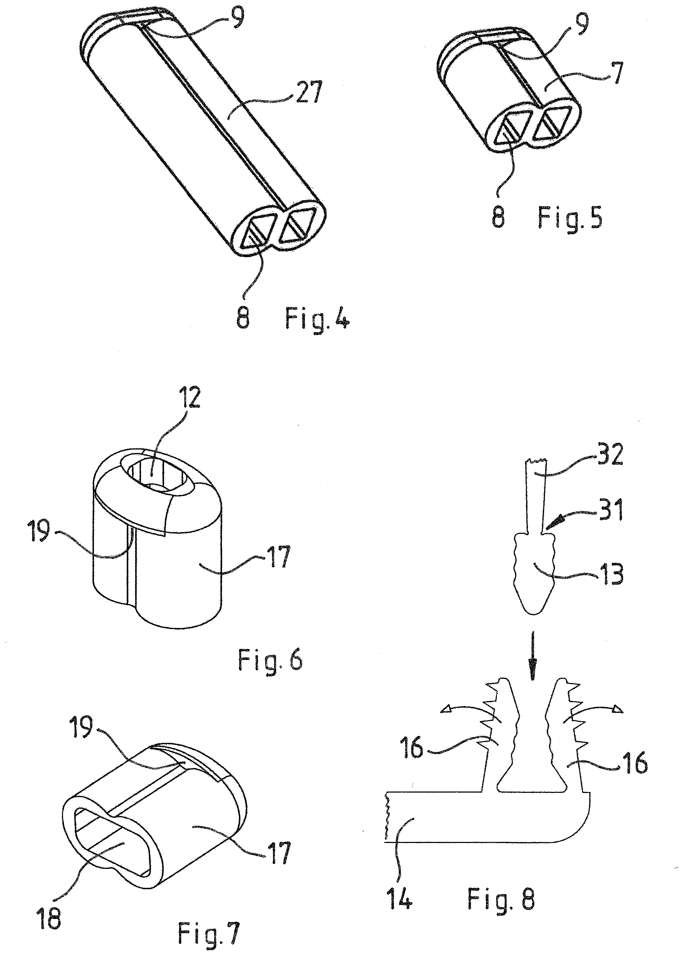

Bei einer zweiten Verbindungsmöglichkeit, wie sie in der Fig. 2 und Fig. 8 dargestellt ist, sind die beiden Befestigungszapfen 16 geringfügig elastisch an der Brillenbacke 14 und dem Nasensteg 15 angeordnet, wobei sie jeweils eine in zueinander entgegensetzte Richtungen gezahnte Außenkontur aufweisen und sich durch eine Durchgangsausnehmung 3 durch ein Brillenglas 2 in eine Befestigungshülse 17 erstrecken, die eine gemeinsame Aufnahmetasche 18 für die beiden Befestigungszapfen 16 aufweist, wobei die Befestigungshülse 17 auf der der Einführöffnung der Befestigungszapfen 16 entgegengesetzten Rückseite eine Durchgangsöffnung 12 aufweist, durch die im montierten Zustand der Brillenbacke 14 und des Nasensteges 15 ein Spreizstift 13 zwischen die Befestigungszapfen 16 einsetzbar ist, der die Befestigungszapfen 16 auseinanderspreizt und so die erforderliche Klemm- und Haltekraft zur Verfügung stellt, in dem er die gezahnte oder gewellte Außenkontur in die Seitenflächen der Befestigungshülse 17 hineindrückt.

Die Befestigungshülsen 7;17;27, wie sie in den Fig. 4, 5, 6, 7 dargestellt sind, weisen an ihren äußeren Enden im Bereich der Einschnürung der achtformartigen Außenkontur vorspringende Hülsenkrempen 9; 19 auf, die als Auflagerflächen der Befestigungshülsen 7;17;27 auf der Rückseite eines Brillenglases 2 dienen. Durch die nicht umlaufende Hülsenkrempe 9; 19 wird insbesondere bei stark konkaven Brillengläsern 2 erreicht, dass die Befestigungshülse 7;17;27 tiefer im Brillenglas 2 versenkt werden kann, als eine mit vollständig umlaufender Hülsenkrempe. Der Spreizstift 13 der zweiten Verbindungsmöglichkeit weist, wie in Fig. 8 angedeutet, eine Sollbruchstelle 31 auf, über die er an ein Griffstück 32 gekoppelt ist und nach der Montage davon abscher- oder abdrehbar ausgebildet ist.

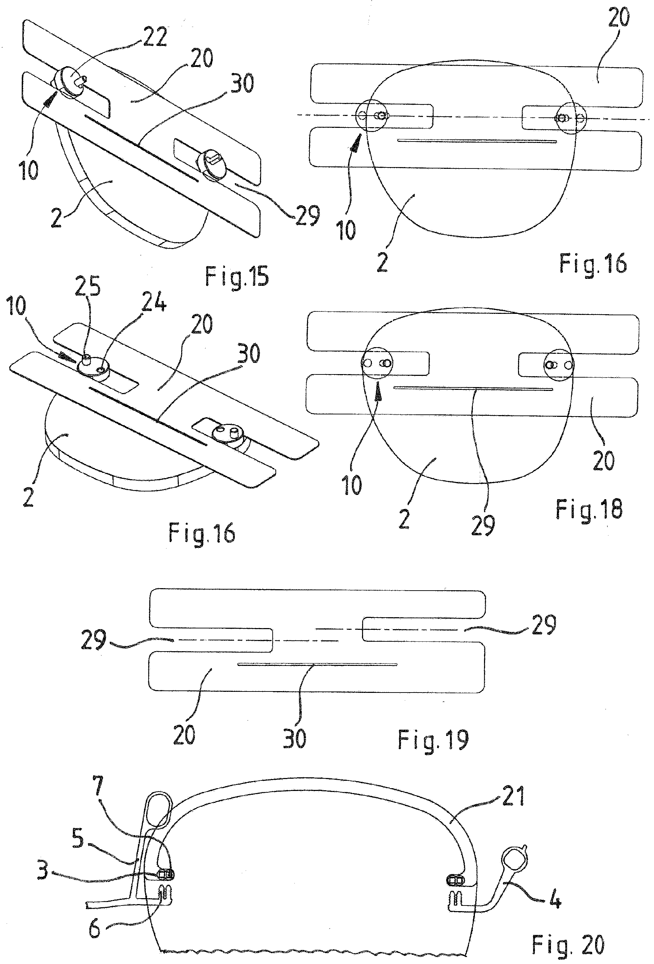

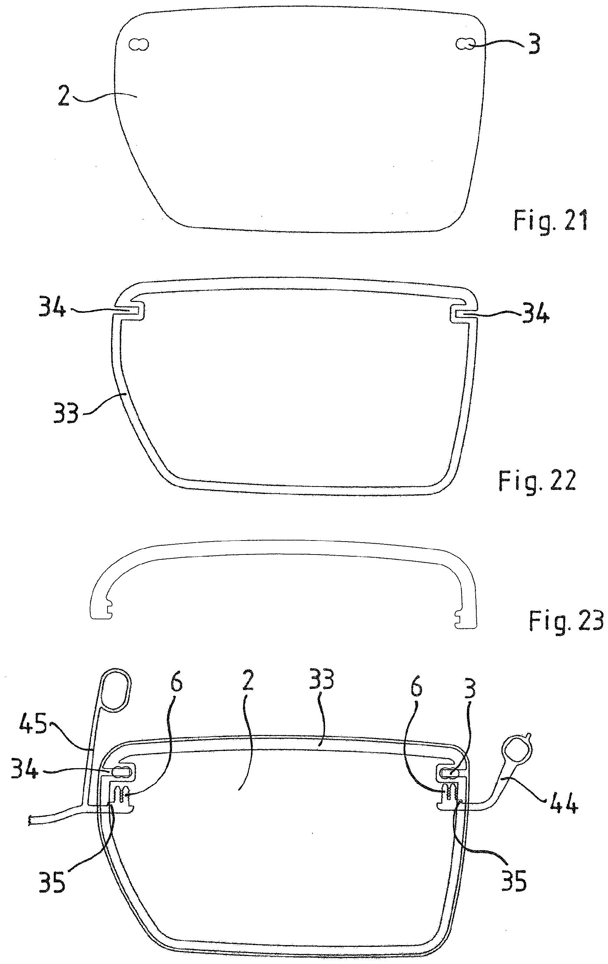

Ein Brillenglas 2 kann, falls die Randlosbrillenfassung 1;11 optisch aufgewertet werden soll und wie in Fig. 20 und 24 gezeigt ist, mit einem ergänzenden Applikationsteil 21;33;40 ausgestattet sein, welches sich von dem Bereich einer Durchgansausnehmung 3 für eine Brillenbacke 4;14;44 C-bügelartig nach oben oder nach unten geschwungen oder rahmenartig im randseitigen Bereich über das bzw. vor dem Brillenglas 2 bis zu dem Bereich der Durchgangsausnehmung 3 eines Nasensteges 5;15;45 erstreckt.

Die Befestigung des Brillenapplikationsteils 21 erfolgt bei einer Ausführungsform, wie sie in den Figuren 1, 2, 3, 20 dargestellt ist, durch sein Festklemmen zwischen dem Brillenglas 2 und dem Nasensteg 5;15 bzw. zwischen dem Brillenglas 2 und der Brillenbacke 4;14 mittels der sich durch die Durchgangsausnehmungen 13 im Brillenglas 2 in die Befestigungshülsen 7;17;27 erstreckenden Befestigungszapfen 6;16.

Bei anderen Ausführungsformen, wie sie in den Figuren 22 bis 24 dargestellt sind, ist das Brillenapplikationsteil 33;40 der Randlosbrillenfassung 1;11 mit einer lösbaren Verbindungsvorrichtung mit dem Nasensteg 45 und der Brillenbacke 44 versehen und entweder, wie in Fig. 24 dargestellt, innen dazwischen oder, wie mit einem C-bügelartigen Brillenapplikationsteil 40, wie es in Fig. 23 dargestellt ist, außen darum herum lösbar und auswechselbar festgeklemmt, wozu die Verbindungsvorrichtung aus jeweils einer seitlich nach innen oder nach außen offenen Befestigungsausnehmung 34;39 im Applikationsteil 33;40 besteht und der Nasensteg 45 und die Brillenbacke 44 jeweils einen Montageabsatz 35 zur Aufnahme der Befestigungsausnehmungen 34;39 aufweisen, die darauf aufgeschoben sind, wobei sich das Brillenapplikationsteil 33;40 zur Montage leicht wölben oder elastisch aufbiegen lässt und sich diese Wölbung oder Verformung nach der Montage elastisch zurückstellt. Dieser Vorgang lässt sich ohne Demontage der Brillenbacken 44 und des Nasensteges 45 beliebig oft wiederholen, sodass von einem Brillennutzer abwechselnd unterschiedlich geformte und/ oder unterschiedlich farbige Applikationsteile 33;40 genutzt werden können.

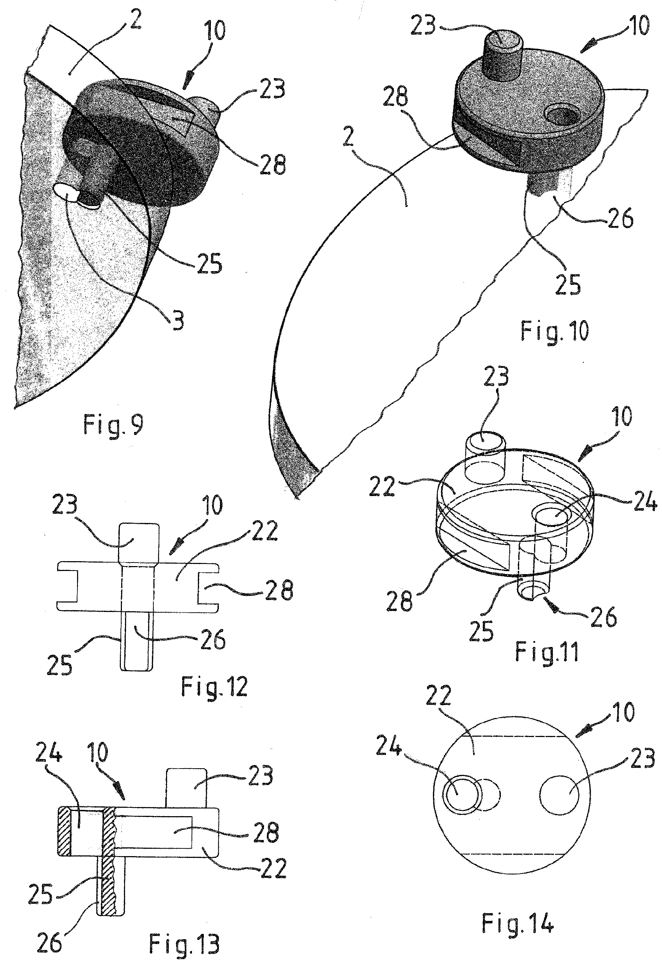

Zur besonders einfachen Fertigung der Randlosbrillenfassung 1;11 ist eine Bohrhilfe 10 für die Durchgangsbohrungen in dem Brillenglas 2 vorgesehen, die aus einem zylindrischen Flachstück 22 besteht, mit einem nach oben gerichteten Zylinderstift 23 mit dem Durchmesser einer Durchgangsbohrung und aus einer Durchgangsbohrung 24 mit dem Durchmesser einer Durchgangsbohrung durch ein Brillenglas 2, wobei der Zylinderstift 23 und die Durchgangsbohrung 24 einen Abstand voneinander aufweisen, der dem Abstand einer Durchgangsbohrung durch ein Brillenglas 2 zu einem Brillenglasrand aufweist, wie dies in den Fig. 9 - 14 dargestellt ist. Die Bohrhilfe 10 weist auf der dem Zylinderstift 23 entgegengesetzten Seite einen weiteren Teilzylinderstift 25 auf, der jedoch eine teilkreisförmige Ausnehmung 26 aufweist, deren Oberfläche mit der Durchgangsbohrung 24 durch die Bohrhilfe 10 fluchtet, sodass im eingesetzten Zustand dieses Teilzylinderstiftes 25 in eine kreisrunde Durchgangsbohrung durch ein Brillenglas 2, durch die Durchgangsbohrung 24 in der Bohrhilfe 10 hindurch, ein weiteres Durchgangsloch in ein Brillenglas 2 hineingebohrt werden kann, welches sich dabei teilweise mit der ersten Durchgangsbohrung schneidet. Die Mittelachse der Durchgangsbohrung 24 durch die Bohrhilfe 10 verläuft also enger neben der ersten Durchgangsbohrung des Brillenglases 2, als das Maß der Summe der beiden Radien der Durchgangsbohrungen aufweist, sodass im Endeffekt die achtformartige Kontur der Durchgangsausnehmung 3 erzeugt ist.

Als Montagehilfe ist des Weiteren eine Bohrhilfenaufnahme 20 für jeweils zwei Bohrhilfen 10 vorgesehen, in die, wie in den Fig. 15 - 18 dargestellt, die Bohrhilfen 10 in seitliche Seitenausnehmungen 29 eingeführt werden, wobei die Bohrhilfen 10 sich gegenüberliegende Parallelnuten 28 aufweisen, deren jeweilige Nutgrunde der Breite der Seitenausnehmungen 29 entsprechen. In den Bohrhilfenaufnahmen 20, wie sie in den Fig. 15 - 19 dargestellt sind, sind des Weiteren Schlitzausnehmungen 30 angeordnet, die zur Durchsicht einer auf einem Brillenglas 2 markierten Glasachse angeordnet sind.

Das Einbringen einer Durchgangsausnehmung 3 erfolgt nun derart, dass zunächst eine Bohrhilfenaufnahme 20 temporär auf einem Brillenglas 2 festgeklebt wird, woraufhin seitlich in die Seitenausnehmungen 29 zwei Bohrhilfen 10 in ihren Parallelnuten 28 eingeschoben werden, wobei zunächst der Zylinderstift 23 am Rand eines Brillenglases 2 zum Anliegen kommt und eine Bohrung durch dessen Durchgangsbohrung 24 hindurch in ein Brillenglas 2 eingebracht werden kann. Anschließend wird die Bohrhilfe 10 seitlich aus den Seitenausnehmungen 29 herausgezogen und umgedreht wieder eingeführt, wobei dann der Teilzylinderstift 25 in die zuvor gebohrte Durchgangsbohrung eingesetzt wird, woraufhin eine zweite Bohrung durch die Durchgangsbohrung 24 der Bohrhilfe 10 in das Brillenglas 2 eingebracht werden kann, die sich mit der ersten Bohrung derart überschneidet, dass nach Demontage der Bohrhilfe 10 eine achtformartige Durchgangsausnehmung 3 erzeugt ist.

Bei einer weiteren Ausführungsform ist einem Brillenglas 2 ein Applikationsteil 38 zugeordnet, welches sich als Schmuckteil, ähnlich einem Windsorring, außen um die Stirnseite des Brillenglases 2 herum erstreckt. Das Brillenapplikationsteil 38 ist dabei geschlossen ringförmig als Schmuckring 36 ausgebildet und weist einen Durchmesser vom Umfang des Brillenglases 2 auf. Das Brillenglas 2 selber ist zur Montage dieses Brillenapplikationsteils 38 umlaufend mit einer Ringnutausnehmung ausgestattet und der Schmuckring 36 weist einen umlaufenden Innensteg 37 auf und besitzt somit einen etwa T-Profilförmigen Querschnitt auf, wobei sich der Innensteg 37 im montierten Zustand des Schmuckringes 36 in die Ringnutausnehmung hinein erstreckt.

Der Schmuckring 36 ist aus einem weichen Kunststoff gefertigt und geringfügig elastisch ausgebildet, sodass diese Brillenapplikationsteil 38, wie auch das vorgenannte Brillenapplikationsteil 33, als von einem Brillennutzer selber leicht austauschbares Schmuckaccessoire ausgebildet ist.

## Patentansprüche

1. Randlosbrillenfassung aus Brillengläsern (2) mit in Durchgangsausnehmungen (3) festgelegten Brillenbacken (4;14;44) und/ oder Nasenstegen (5;15;45), **dadurch gekennzeichnet, dass** eine Durchgangsausnehmung (3) aus parallel nebeneinander angeordneten Durchgangsbohrungen gleichen oder unterschiedlichen Durchmessers besteht, deren Mittelachsen enger nebeneinander verlaufen, als das Maß der Summe ihrer beiden Radien beträgt und dass eine achtformartige Durchgangsausnehmung (3) erzeugt ist.

2. Randlosbrillenfassung nach Anspruch 1, **dadurch gekennzeichnet, dass** eine Brillenbacke (4;14;44) und/ oder ein Nasensteg (5;15;45) ein parallel zu einem Brillenglas (2) verlaufendes Ende mit zwei winklig davon in die Durchgangsausnehmung (3) hineinreichende Befestigungszapfen (6;16) aufweist, die sich in eine von der entgegengesetzten Seite des Brillenglases (2) eingesetzte Befestigungshülse (7;17;27) erstrecken.

3. Randlosbrillenfassung nach Anspruch 2, **dadurch gekennzeichnet, dass** die zwei Befestigungszapfen (6) starr an der Brillenbacke (4;44) oder dem Nasensteg (5;45) angeordnet sind und eine gezahnte und/ oder gewellte Außenkontur aufweisen und die Befestigungshülse (7;27) zwei Aufnahmetaschen (8) für die Befestigungszapfen (6) aufweist.

4. Randlosbrillenfassung nach Anspruch 2, **dadurch gekennzeichnet, dass** die zwei Befestigungszapfen (16) elastisch an der Brillenbacke (14) oder dem Nasensteg (15) angeordnet sind und jeweils in zueinander entgegengesetzte Richtungen eine nach außen gerichtete verzahnte und/ oder gewellte Außenkontur aufweisen und dass die Befestigungshülse (17) eine gemeinsame Aufnahmetasche (18) für die beiden Befestigungszapfen (16) aufweist und dass die Befestigungshülse (17) eine Durchgangsöffnung (12) in der Auf nahmetasche (18) aufweist, durch die ein Spreizstift (13) zwischen die Befestigungszapfen (16) eingesetzt ist.

5. Randlosbrillenfassung nach Anspruch 2, **dadurch gekennzeichnet, dass** die Befestigungshülse (7;17;27) eine achtformartige Außenkontur mit einer Einschnürung aufweist und nur im Bereich der Einschnürung im Endbereich der Befestigungshülse (7;17;27) eine beidseitig vorspringende Hülsenkrempe (9;19) als Auflagerfläche auf einer Rückseite eines Brillenglases (2) ausgebildet ist.

6. Randlosbrillenfassung nach Anspruch 2, **dadurch gekennzeichnet, dass** zwischen einem Brillenglas (2) und einer Brillenbacke (4;14;44) und/ oder zwischen dem Brillenglas (2) und dem Nasensteg (5;15;45) oder zwischen einer Brillenbacke (4;14;44) und einem Nasensteck (5;15;45) ein Applikationsteil (21;33;40) angeordnet ist, welches im Bereich der Befestigungszapfen (6;16) eine Befestigungsausnehmung (34;39) aufweist und entweder von den Befestigungszapfen (6;16) durchtreten ist oder in deren Bereich den Nasensteg (5;15;45) und die Brillenbacke (4;14;44) von innen oder von außen umschließt.

7. Randlosbrillenfassung nach Anspruch 6, **dadurch gekennzeichnet, dass** sich das Applikationsteil (21;33;40) von dem Bereich einer Durchgangsausnehmung (3) für eine Brillenbacke (4;14;44) C-formartig nach oben oder nach unten oder rahmenartig nach oben und unten geschwungen im randseitigen Bereich vor dem Brillenglas (2) bis zu einem Bereich der Durchgangsausnehmung (3) eines Nasensteges (5;15;45) erstreckt.

8. Randlosbrillenfassung nach Anspruch 7, **dadurch gekennzeichnet, dass** das Applikationsteil (21) zwischen dem Glas (2) und dem Nasensteg (5;15) und zwischen Glas (2) und der Brillenbacke (4;14) festgeklemmt ist.

9. Randlosbrillenfassung nach Anspruch 7, **dadurch gekennzeichnet, dass** das Applikationsteil (33;40) eine lösbare Verbindungsvorrichtung mit dem Nasensteg (45) und der Brillenbacke (44) aufweist und dazwischen oder darum herumgreifend festgelegt ist.

10. Randlosbrillenfassung nach Anspruch 9, **dadurch gekennzeichnet, dass** die Verbindungsvorrichtung des Applikationsteils (33;40) aus einer seitlich offenen Befestigungsausnehmung (34;39) im Applikationsteil (33;40) besteht und der Nasensteg (45) und die Brillenbacke (44) jeweils einen Montageabsatz (35) zur Aufnahme der Befestigungsausnehmung (34;39) aufweisen.

11. Randlosbrillenfassung nach einem der vorgenannten Ansprüche, **dadurch gekennzeichnet, dass** die Brillenbacken (4;14;44) und der Nasensteg (5;15;45) aus Titanblech oder einem Blech aus einer Titanlegierung bestehen.

12. Randlosbrillenfassung nach einem der vorgenannten Ansprüche, **dadurch gekennzeichnet, dass** ihr eine Bohrhilfe (10) für die Herstellung der Durchgangsbohrungen der Durchgangsausnehmung (3) in einem Brillenglas (2) zugeordnet ist, die aus einem Flachstück (22) mit einem nach oben gerichteten Zylinderstift (23) mit dem Durchmesser einer Durchgangsbohrung besteht und aus einer Durchgangsbohrung (24) in dem Flachstück (22) mit dem Durchmesser einer Durchgangsbohrung durch ein Brillenglas (2), wobei der Zylinderstift (23) und die Durchgangsbohrung (24) in einem gegenseitigen Abstand eines Brillenglasrandes von einer ersten Durchgangsbohrung in einem Brillenglas (2) angeordnet sind, und dass die Bohrhilfe (10) weiterhin aus einem nach unten gerichteten Teilzylinderstift (25) besteht, mit dem Durchmesser einer Durchgangsbohrung durch ein Brillenglas (2), deren Mittelachse enger neben der der ersten Durchgangsbohrung verläuft, als das Maß der Summe der beiden Radien beträgt und wobei der Teilzylinderstift (25) einen kreisförmigen Querschnitt mit einer teilkreisförmigen Ausnehmung (26) aufweist.

13. Randlosbrillenfassung nach Anspruch 12, **dadurch gekennzeichnet, dass** das Flachstück (22) sich rechtwinklig gegenüberliegende Parallelnuten (18) aufweist und zusammen mit einem zweiten Flachstück (22) einer Bohrhilfenaufnahme (20) zugehörig ist, die aus einem flachen Blech besteht, welches geringfügig breiter ausgebildet ist als ein zu bearbeitendes Brillenglas (2) und die mit zwei zueinander gerichteten parallelen Seitenausnehmungen (29) in gleicher oder unterschiedlicher Höhe ausgestattet ist, in die die von den Parallelnuten (28) seitlich geführten Flachstücke (22) von außen nach innen einschiebbar sind und dass im Blech eine schmale Schlitzausnehmung (30) zur Durchsicht einer auf ein Brillenglas (2) markierten Glasachse angeordnet ist.

14. Randlosbrillenfassung nach einem der vorgenannten Ansprüche, **dadurch gekennzeichnet, dass** einem Brillenglas (2) ein Applikationsteil (38) zugeordnet ist, welches sich als Schmuckteil außen um die Stirnseite des Brillenglases (2) herum erstreckt.

15. Randlosbrillenfassung nach Anspruch 14, **dadurch gekennzeichnet, dass** das Applikationsteil (38) geschlossen ringförmig als Schmuckring (36) ausgebildet ist, der einen Durchmesser vom Umfang des Brillenglases (2) aufweist.

16. Randlosbrillenfassung nach Anspruch 15, **dadurch gekennzeichnet, dass** ein Brillenglas (2) umlaufend mit einer Ringnutausnehmung ausgestattet ist und der Schmuckring (36) einen umlaufenden Innensteg (37) aufweist, der sich im montierten Zustand des Schmuckringes (36) in die Ringnutausnehmung erstreckt.

17. Randlosbrillenfassung nach Anspruch 14-16, **dadurch gekennzeichnet, dass** der Schmuckring (36) aus Kunststoff gefertigt und geringfügig elastisch ausgebildet ist.

18. Randlosbrillenfassung nach einem der vorgenannten Ansprüche, **dadurch gekennzeichnet, dass** die Applikationsteile (33;38;40) als von einem Brillennutzer selber leicht austauschbare Schmuckaccessoires ausgebildet sind.
